(19) Europäisches Patentamt / European Patent Office / Office européen des brevets

(11) **EP 1 990 629 A1**

(12) **EUROPEAN PATENT APPLICATION**

(43) Date of publication:
**12.11.2008 Bulletin 2008/46**

(51) Int Cl.:
**G01N 21/35** (2006.01)  **G01N 21/37** (2006.01)
**G01N 21/17** (2006.01)  **G01N 21/61** (2006.01)

(21) Application number: **08008570.7**

(22) Date of filing: **07.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.05.2007 US 928000 P**
**01.05.2008 US 113636**

(71) Applicant: **Core Enterprises Inc.**
**Coral Springs FL 33065 (US)**

(72) Inventor: **Cardinale, Dennis**
**Plantation**
**FL 33322 (US)**

(74) Representative: **Bittner, Thomas L.**
**Forrester & Boehmert**
**Pettenkoferstrasse 20-22**
**80336 München (DE)**

(54) **Low-power fast infrared gas sensor, hand held gas leak detector, and gas monitor utilizing absorptive-photo-acoustic detection**

(57) A gas sensor for sensing the presence of a gas includes an IR source, a microphone, a reference gas substantially similar to the gas to be detected, a reference body defining a reference chamber therein, the reference chamber having a pressure port coupled to the microphone, and a broad-band optical window through which at least IR wavelengths corresponding to absorption peaks of the predetermined gas may pass. The window is disposed between the IR source and reference chamber. The reference gas is contained within the reference chamber between the optical window and the microphone. The sensor can be included in a hand-held gas detection instrument having power supply, an outer shell, a circuit board assembly including sensor circuitry, a suction pump, actuation controls and status indicators. A probe defining a lumen therethrough supplies the sample gas.

FIG. 2

**Description**

The invention lies in the field of gas detection based upon Non-dispersive Infrared Absorption (NDIR). Especially, it refers to a low-power fast infrared gas sensor, a hand held gas leak detector, and a gas monitor utilizing absorptive-photo-acoustic detection.

This application claims the benefit of U.S. Provisional Application No. 60/928,000 filed May 7, 2007, the complete disclosure of which is hereby incorporated by reference herein in its entirety.

Description of Related Art

NDIR technology has existed for a number of years as a preferred method of gas detection. The technology depends on the fact that gases absorb infrared energy (light) at particular wavelengths, and different gases have peak absorption at different wavelengths. This absorption occurs according to the Beer-Lambert law:

$$T = \frac{I_1}{I_0} = e^{-\alpha l}$$

where **T** is transmittance, $I_0$ is the IR energy intensity (at a particular wavelength) presented to the gas sample, $I_1$ is the IR energy intensity transmitted by the gas sample, $\alpha$ is the absorption coefficient of the gas, and $\ell$ is the path length.

There are at least two types of NDIR gas detection systems in use today: Absorptive Infrared Detection (AID) and Photo-acoustic Infrared Detection (PID). A description of these two methods of infrared detection can be found in "Photo-acoustic Infrared Technology for Detection of Refrigerant Gases" by Allan Roczko of MSA, which is incorporated herein by reference in its entirety. There is a significant difference between the two technologies: the AID system results in a decreasing signal with increasing gas concentration and the PID system results in an increasing signal with increasing gas concentration. For each type of Infrared Detection, there are significant drawbacks.

Drawbacks of Absorptive Infrared Detection

For example, drawbacks specific to AID are detection speed and stability. Pyroelectric devices (e.g., thermopiles, temperature detectors) of various configurations are typically used to convert the incident infrared energy into an electrical signal by producing an electrical signal proportional to temperature (or temperature change or differential). These devices generally have a significant thermal mass, thereby limiting the speed at which the detector can detect changes in incident energy. In addition, as these devices primarily detect heat, and not infrared energy (heat is a secondary effect, generated by the absorption of infrared energy), they are susceptible to drift and noise caused by changes in ambient conditions (e.g., warm up, ambient temperature changes, mechanical vibrations, etc.).

Various methods have been employed to reduce or reject ambient noise sources. One such method is to use two detectors, one for reference and one for sample. By subtracting the reference detector signal from the sample detector signal, common mode effects (e.g., ambient temperature, mechanical noise, etc) are reduced or eliminated, and differential mode effects (i.e., the actual signal) are enhanced. Another method to suppress (or eliminate) drift caused by ambient conditions is to use a "light-chopping" method. Either the power to the IR source is modulated at a low frequency (electrical chopping), resulting in on and off periods of infrared light, or a mechanical chopping wheel (mechanical chopping) is used to interrupt the infrared light periodically. This causes an alternating current (AC) signal to be output from the thermopile, which then can be filtered and amplified, prior to conversion back to direct current (DC). Generally, a "lock-in" (synchronous) amplifier is used so that only electrical signals at the chopping frequency are converted to DC and the signals are, then, averaged over long periods of time to create a drift free signal. Chopping can be used in conjunction with the sample/reference method indicated above, for even greater noise performance.

Unfortunately, there are problems with the methods described above. The sample/reference approach requires two duplicate optical paths and detectors, the detectors themselves needing to be carefully matched and calibrated. In addition, duplicate (well-matched) electronics for signal gain and conditioning are required, prior to the subtracting element that creates the final signal. All this duplicity results in a final cost that is more than twice the cost of a single channel detector.

The chopping method, while greatly reducing drift, has its own drawbacks. Generally, IR sources have a large thermal mass, limiting electrical chopping to around 1 Hz. Therefore, expensive, unreliable mechanical choppers are sometimes used to increase the chopping speed. Although there exist low-thermal-mass IR sources that can be operated at higher frequencies (up to 25 Hz or more), regardless of the chopping method employed, thermopile detectors are typically the limiting factor. These detectors generally significantly attenuate IR signals modulated at greater than a few hertz.

The synchronous amplifiers required to convert the AC signal back to a DC signal contribute their own problems. First, they are susceptible to phase noise; signal drift due to phase changes of the electrical signal presented to the amplifier. Phase noise occurs when analog component values change due to time or ambient condition changes. Second, the output of a synchronous amplifier is a low-pass filter with a time constant exceeding many periods of the input signal. This results in a very slowly changing output for fast changing input conditions.

Drawbacks of Photo-acoustic Infrared Detection

It should be noted firstly that Photo-acoustic Infrared Detection requires, at a minimum, an AC (electrically or mechanically pulsed) source of infrared light, with all of the drawbacks as indicated above. More significantly, though, PID requires that the sample chamber, where the gas in question is illuminated by a band-limited source of infrared radiation, be periodically sealed and purged. In other words, a number of mechanical valves must be used to alternately flow sample gas into the cell and then close off the inlet and outlets while acoustic measurements take place. As might be expected, this has a number of implications. Most obviously, cost is severely impacted -- due to the use of electrically operated mechanical valves. The power required to drive the valves is also an issue. Finally, measurements can only be made while the valves are in the closed position, eliminating the possibility of continuous analysis. While this might be adequate for a monitoring-type system -- where a device is looking for slow changes in gas concentration over long periods of time -- it would not be acceptable for a leak detecting device -- where rapid changes over short periods of time must be detected.

Additionally, for quantitative applications (i.e., gas monitors), calibrating such a device requires *in situ* frequent sampling of at least one known concentration of target gas. This requirement is due to the fact that the detector outputs *no signal* when the target gas is not present, and the magnitude of the output for any given concentration of target gas will change with respect to the IR output of the IR source (which degrades over time), and also for any component parameter variations over time or temperature. Calibrated gas samples are expensive, difficult to procure in remote locations and, many times, are hazardous (e.g., poisonous, explosive).

Drawbacks of Both Technologies

The main drawback of both technologies is the requirement for an optical filter(s) for band-limiting the infrared energy to the bands of interest for the gas(es) in question. First, these filters are expensive. In addition, even the best filter's pass-band spectrum cannot precisely match the absorption spectrum of the gas(es) in question, therefore degrading the selectivity and sensitivity of the detector. Moreover, the pass-band spectra of such filters are subject to variations due to each of manufacturing processes, temperature, humidity, and age.

Additionally, both technologies require significant electrical power to operate. As the optical filters described above never pass 100% of the infrared energy, even at the pass-band of interest, adequate power must be supplied to the IR source so that the energy finally reaching the IR Detector (thermopile or sample gas chamber) is adequate to raise the detector signal above the noise. Mechanical choppers used in AC designs, and valves used in photo-acoustic designs also consume significant power and, as mechanical devices, are inherently unreliable.

One "Infrared Leak Detector" is described in U.S. Patent No. 7,022,993 to Williams. A device built according to the disclosure of the '993 patent is sold as the "PredatIR" IR Refrigerant Leak Detector. The owner's manual of the PredatIR device is hereby incorporated herein by reference in its entirety. The detector disclosed in the '993 patent is nothing more than an un-referenced, un-chopped, leak detector employing Absorptive Infrared Detection. This detector does not utilize any method for stabilizing the resulting signal obtained from the detector (nor does the description disclose any such stabilization). Thus, there is no possible way for the '993 device to quantify the concentration of gas (es)-of-interest within the sample chamber.

Throughout the '993 description, the clear purpose is to create a low-cost method for determining changes in the optical signal produced by the passing of gas(es)-of-interest through the sample chamber. The specification thereof specifically indicates that the '993 invention results in fast detection through the use of DC (non-chopped) infrared energy and an analog differentiator circuit to detect signal edges. While detection of target gases results using the '993 device, the '993 invention is susceptible to frequent false indications due to rapidly changing environmental conditions, for example, to insufficient warm-up, to electrical noise, or to other ambient noise sources. Despite that the '993 specification maintains that the device is "low power," actually, the DC energy required to power the '993 IR source requires at least twice the power of an electrically chopped system. This is self-evident in that the preferred embodiment requires 12V rechargeable Ni-Cd batteries to operate for only 4 to 5 hours. The lack of stability of the '993 invention is evidenced by the fact that the preferred embodiment requires a 2-minute warm-up period each time the unit is powered on.

Significantly, operating an IR source at DC also seriously impacts the life of the IR source. One of skill in the art knows that the energy output of IR sources drops over time and that the rate of such a drop is related to the power dissipated by the source. For example, a source operated at 50% duty (AC) can be expected to operate longer than a source operated at 100% (DC).

In all examples described in the '993 disclosure, an optical filter, specially fabricated to particular wavelengths based on the gas(es) of interest, is required. As an additional drawback, the '993 device requires manual user intervention in the form of a zero or null control, as evidenced by the I Hz/ 2 Hz alarm function.

A "Refrigerant Impurity Analyzer" is described in U.S. Patent No. 5,498,873 to Liebermann. The '873 Analyzer is a device for determining that a sample of one type of refrigerant is contaminated by another type of refrigerant. The device utilizes a standard incandescent light bulb as an IR source and eliminates the optical filter by utilizing a second chamber filled with the contaminating gas in question subsequent to the first chamber through which flows the sample refrigerant. A piezoelectric element is used to detect pressure changes (acoustic energy) in the second chamber. These pressure changes only occur when radiation enters the second chamber containing wavelengths that are absorbed by the gas therein. When gas containing the contaminating refrigerant enters the first chamber, wavelengths in question are absorbed, resulting in a reduction of the pressure changes in the second chamber. Therefore, unlike a true photo-acoustic sensor, the signal output *decreases* with respect to the concentration of the contaminant in the first chamber. The sensor of an analyzer described in the '873 patent has the qualities of an Absorptive Infrared Sensor that employs photo-acoustic principles, while eliminating the need for a fabricated optical filter (the gas in the second chamber behaves as both the filter mechanism and the detection mechanism).

There are two beneficial characteristics of the '873 design: a special optical filter is no longer required and no valves are required as in the photo-acoustic method described above. Nevertheless, the '873 design has significant problems. First, the glass of an incandescent light bulb absorbs most of the IR energy in question. Therefore, a great deal of power is needed to drive the bulb for adequate detection. Second, the thermal time constant of the bulb is very long. Therefore, the pulse rate has to stay at or below 1 Hz, resulting in slow detection. Third, the acoustic energy is converted to an electrical signal through a large, high-impedance piezoelectric device. This device is far more sensitive to high-frequency mechanical noise and rapid atmospheric pressure changes than to the slow electrical chopping rate of the bulb. Thus, significant low pass filtering is needed at the output of the sensor to recover the 1 Hz signal, resulting in an even slower response time. Fourth, the sensor is physically large and cannot be adapted to a hand-held device (regardless of the noise problems that would cause). Due to the large surface area of the components, it is difficult to contain the reference gas in the second chamber for long periods of time.

Based upon the above, it is apparent that there is a need for improving IR gas sensor technology in general.

<u>Summary of the Invention</u>

Like all IR gas sensors, any new IR sensor technology would need at least the following characteristics:

- High selectivity - the sensor should respond only to the gas(es) intended and not to other gases that may contaminate the local atmosphere (unlike Williams);
- High sensitivity - the ability of the sensor to detect very small concentrations of the target gas(es) (unlike Liebermann); and
- Long life - the sensor should exhibit both a long operating life and a long storage life (unlike Williams).
  Additionally, for monitoring-type applications, the following characteristics would improve current IR sensor technology:

- Long-term stability - the sensor output should be stable for similar input conditions over long periods of time (unlike Williams and prior art PID);
- Referencing capabilities -to quantify concentration of the target gas, it must be possible to compare against a sample of known concentration (ideally *zero* concentration) (unlike Williams and prior art PID);
- No *in situ* calibration -- calibrated gas samples should *not* be required for accurate operation (unlike Williams and prior art PID); and
- Ability to detect absolute concentrations of target gas (unlike Williams).
  Finally, for hand-held leak-detection applications, the following characteristics would be a further improvement of existing IR sensor technology;
- Fast detection time - the device should be able to alert the operator to small changes in concentration in less than one second (unlike Liebermann and prior art PID);
- Fast clearing time - the device should cease indicating within one second after the target gas is no longer present or present in concentrations less than a preset threshold (unlike Williams and prior art PID);
- Short-term stability (i.e., immunity to noise) - only changes in target gas concentration should cause output signal changes, not changing ambient conditions or electrical or mechanical noise (unlike Williams);

- Very low power - the device should be able to operate for many hours (>15 hours) with small, common off-the-shelf alkaline batteries (e.g., AAA- or AA-sized batteries) (unlike Liebermann, Williams, prior-art PID, and prior art AID);
- Fast warm up - the instrument should be able to perform to its specifications within 10 seconds after power-on (unlike Williams);
- Small size - the instrument should be small and light enough to wield with one hand (unlike Liebermann);
- Fully automatic - from power-on to use to power-off, the operator should not have to manually zero or calibrate the instrument; the instrument should also automatically ignore background contamination of the local atmosphere (unlike Williams);
- Wide dynamic range - the detector should be able to distinguish both small and large changes in concentration, giving the operator the ability to (a) locate small leaks and (b) zero in on large leaks; and
- Low cost - the detector should have the lowest possible cost, i.e., high-priced optical filters should be eliminated (unlike Williams and prior-art PID/AID).

The inventive systems of the present invention provide the following beneficial attributes all in a hand-held form:

- High selectivity - the sensor of the invention responds only to the gas(es) intended and not to other gases that could contaminate the local atmosphere;
- High sensitivity - the sensor of the invention is able to detect very small concentrations of the target gas(es);
- Long life - the sensor of the invention exhibits both a long operating life and a long storage life;
- Long-term stability - output of the sensor according to the invention is stable for similar input conditions over long periods of time;
- Referencing capability -the inventive device makes it possible to compare measured target gas(es) against a sample of known concentration (zero concentration) to quantify concentration of the target gas;
- No calibration - there is no requirement to have calibrated gas samples for accurate operation of the invention;
- Ability to accurately quantify target gas concentration;
- Fast response time - the device of the invention is able to alert the operator to small changes in concentration in less than one second;
- Short-term stability (i.e., immunity to noise) - only changes in target gas concentration cause output signal changes of the invention and changes in ambient conditions or electrical or mechanical noise do not cause output signal changes;
- Very low power - the device of the invention is able to operate for > 15 hours with common off-the-shelf alkaline batteries such as AA-sized batteries;
- Fast warm up - the instrument of the invention performs to its specifications within 10 seconds after power-on;
- Small size - the instrument of the invention can be wielded with one hand;
- Fully automatic - from power-on to use to power-off, the operator of the invention does not have to manually zero or calibrate the instrument of the invention and the instrument automatically ignores background contamination of the local atmosphere;
- Wide dynamic range - the detector of the invention distinguishes both small and large changes in concentration so that the operator can locate small leaks and zero in on large leaks; and
- Low cost - the detector of the invention has a low cost because it eliminates the need for high-priced optical filters.

With the foregoing and other objects in view, there is provided, in accordance with the invention, a gas sensor for sensing the presence of at least one predetermined gas, the gas sensor including an IR source, a microphone, a reference gas substantially similar to the at least one predetermined gas to be detected, a reference body defining a reference chamber therein, the reference chamber having a pressure port coupled to the microphone, and a broad-band optical window through which at least IR wavelengths corresponding to absorption peaks of the predetermined gas may pass, the optical window disposed between the IR source and the reference chamber, the reference gas being contained within the reference chamber between the optical window and the microphone.

In accordance with another feature of the invention, the IR source is of low thermal mass.

In accordance with a further feature of the invention, there is also provided a secondary broad-band optical window interposed between the IR source and an sample gas to isolate the IR source from the sample gas.

In accordance with an added feature of the invention, the secondary optical window is an upstream IR window and the optical window is a downstream IR window.

In accordance with an additional feature of the invention, the pressure port is acoustically coupled to the microphone.

In accordance with yet another feature of the invention, the upstream and downstream windows are of one of the group consisting of sapphire, calcium fluoride, zinc selenide, silicon, and germanium. In particular, the upstream and downstream windows can be coated to narrow the band of IR energy transmitted by the upstream and downstream windows.

In accordance with yet a further feature of the invention, there are provided a first printed circuit board operatively connected to the IR Source and including electrical contacts for interfacing with a gas detection instrument and a second printed circuit board operatively connected to the microphone and including active filter circuitry and contacts electrically connected with the first printed circuit board.

In accordance with yet an added feature of the invention, a manifold connected to the reference body and defining a sample chamber adjacent the reference chamber, the sample chamber having an input port and an output port for receiving and exhausting an sample gas, the IR source being disposed to direct IR energy through the sample gas in the sample chamber.

In accordance with yet an additional feature of the invention, a secondary broad-band optical window interposed between the IR source and the sample chamber to impart IR energy generated from the IR source to the sample gas, the secondary optical window being an upstream IR window and the optical window being a downstream IR window, the IR source being disposed to direct IR energy first through the upstream window, then through the sample gas in the sample chamber, then through the downstream window and into the reference gas.

In accordance with again another feature of the invention, the sample chamber is at least one of polished, plated, and gold plated and/or the reference chamber is at least one of polished, plated, and gold plated.

In accordance with again a further feature of the invention, the IR Source is operable to be driven with a PWM waveform, and a PWM waveform generator is operatively coupled to the IR Source. The PWM waveform generator can be a single-stage generator or a two-stage generator.

In accordance with again an added feature of the invention, the reference gas is Carbon Dioxide.

In accordance with again an additional feature of the invention, the microphone is an electret condenser microphone.

In accordance with still another feature of the invention, a hand-held gas detection instrument includes a manifold connected to the reference body and defining a sample chamber adjacent the reference chamber. The sample chamber has an inlet port and an outlet port for receiving and exhausting the sample gas. The IR source is disposed to direct IR energy through the sample gas in the sample chamber. Also included is a first printed circuit board operatively connected to the IR Source and having first contacts electrically connected to the IR source for interfacing with the gas detection instrument and a second printed circuit board operatively connected to the microphone and having active filter circuitry and second contacts electrically connected with the first printed circuit board. Further included is a power supply, a circuit board assembly operatively connected to the power supply The circuit board assembly includes sensor circuitry operatively connected to the first and second printed circuit boards. A suction pump is fluidically connected to at least one of the input port and the output port. The circuit board is also connected to controls for actuating at least one of the IR source, the sensor, and the pump, indicators for reading a status of instrument, and a probe defining a lumen therethrough fluidically connected to the input port. An outer shell defines a sensor compartment sized to fit therein the IR source, the microphone, the reference body, the upstream and downstream optical windows and a power supply compartment sized to fit therein the power supply.

In accordance with still a further feature of the invention, the gas detection instrument is one of a gas-leak-detection instrument and a gas monitoring instrument.

With the objects of the invention in view, there is also provided a gas sensor for sensing the presence of at least one predetermined gas, the gas sensor includes an IR source, a microphone, a reference gas substantially similar to the at least one predetermined gas to be detected, a reference body defining a reference chamber therein, the reference chamber having a pressure port coupled to the microphone, a manifold connected to the reference body and defining a sample chamber adjacent the reference chamber, the sample chamber having an input port and an output port for receiving and exhausting an sample gas, a downstream broad-band optical window disposed between the reference chamber and the sample chamber, disposed between the IR source and the reference chamber, and through which at least IR wavelengths corresponding to absorption peaks of the predetermined gas may pass, the reference gas being contained within the reference chamber between the downstream optical window and the microphone, an upstream broad-band optical window disposed between the IR source and the sample chamber to isolate the IR source from an sample gas in the sample chamber, the IR source being disposed to direct IR energy first through the upstream window, then through the sample gas in the sample chamber, then through the downstream window and into the reference gas, a first printed circuit board operatively connected to the IR Source and including electrical contacts for interfacing with a gas detection instrument, and a second printed circuit board operatively connected to the microphone and including active filter circuitry and contacts electrically connected with the first printed circuit board.

With the objects of the invention in view, there is also provided a hand-held gas detection instrument, including a power supply, an outer shell defining sensor compartment sized to fit the gas sensor and a power supply compartment sized to fit therein the power supply, a circuit board assembly operatively connected to the power supply and including sensor circuitry operatively connected to the first and second printed circuit boards, a suction pump fluidically connected to at least one of the input port and the output port, controls for actuating at least one of the IR source, the sensor, and the pump, and indicators for reading a status of instrument, and a probe defining a lumen therethrough fluidically connected to the input port.

According to another aspect of the invention, a gas leak detector comprising any sensor and Fast Digital Quadrature Detection algorithm (FDQD) is provided.

According to still another object of the invention, a gas monitor comprising any sensor and Fast Digital Quadrature Detection algorithm (FDQD) is provided.

According to another aspect of the invention, a computational method of computing the magnitude of a digitalized AC waveform comprising the steps of Fast Digital Quadrature Detection is provided.

According to still another object of the invention, a method of calibrating a gas leak detector utilizing one or more PWMs is provided.

According to another aspect of the invention, a method of calibrating a gas monitor utilizing one or more PWMs is provided.

Although the invention is illustrated and described herein as embodied in a low-power, fast infrared gas sensor, hand-held gas leak detector, and gas monitor utilizing absorptive photo-acoustic detection, it is, nevertheless, not intended to be limited to the details shown because various modifications and structural changes may be made therein without departing from the spirit of the invention and within the scope and range of equivalents of the claims.

The construction and method of operation of the invention, however, together with additional objects and advantages thereof, will be best understood from the following description of specific embodiments when read in connection with the accompanying drawings.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one of ordinary skill in the art to variously employ the present invention in virtually any appropriately detailed structure. Further, the terms and phrases used herein are not intended to be limiting; but rather, to provide an understandable description of the invention. While the specification concludes with claims defining the features of the invention that are regarded as novel, it is believed that the invention will be better understood from a consideration of the following description in conjunction with the drawing figures, in which like reference numerals are carried forward.

The terms "a" or "an", as used herein, are defined as one or more than one. The term "plurality," as used herein, is defined as two or more than two. The term "another," as used herein, is defined as at least a second or more. The terms "including" and/or "having," as used herein, are defined as comprising (i.e., open language). The term "coupled," as used herein, is defined as connected, although not necessarily directly, and not necessarily mechanically.

As used herein, the term "about" or "approximately" applies to all numeric values, whether or not explicitly indicated. These terms generally refer to a range of numbers that one of skill in the art would consider equivalent to the recited values (i.e., having the same function or result). In many instances these terms may include numbers that are rounded to the nearest significant figure. In this document, the term "longitudinal" should be understood to mean in a direction corresponding to an axis of the exemplary cylindrical sensor assembly. The terms "program," "computer program," "computer algorithm," "software application," and the like as used herein, are defined as a sequence of instructions designed for execution on a computer system, microprocessor, or microcontroller. A "program," "computer program," "computer algorithm," or "software application" may include a subroutine, a function, a procedure, an object method, an object implementation, an executable application, an applet, a servlet, a source code, an object code, a shared library/ dynamic load library and/or other sequence of instructions designed for execution on a computer system, microprocessor, or microcontroller.

Brief Description of the Drawings

The accompanying figures, where like reference numerals refer to identical or functionally similar elements throughout the separate views, and which together with the detailed description below are incorporated in and form part of the specification, serve to further illustrate various embodiments and to explain various principles and advantages all in accordance with the present invention.

FIG. 1    is a perspective view of an Absorptive-Photo-acoustic Infrared Gas Sensor according to the invention;
FIG. 2    is a cross-sectional view of the Absorptive-Photo-acoustic Infrared Gas Sensor of FIG. 1;
FIG. 3    is a perspective view from a reference chamber side of the gas sensor of FIGS. 1 and 2;
FIG. 4    is a perspective view from a sample chamber side of the gas sensor of FIGS. 1 and 2;
FIG. 5    is an exploded perspective view of the gas sensor of FIGS. 1, 2, 3 and 4;
FIG. 6    is a block circuit diagram illustrating the configuration of components in a gas detection system utilizing the Absorptive-Photo-acoustic Infrared Gas Sensor according to the present invention;

FIG. 7    is a set of graphs comparing single-stage and two-stage pulse width modulation to generate square-wave signals of varying duty cycles to be presented to the infrared source of the gas detection system according to the invention;

FIG. 8    is a perspective view of an exemplary embodiment of a hand-held gas leak detection instrument according to the invention;

FIG. 9    is an exploded perspective view of the instrument of FIG. 8;

FIG. 10    is a perspective view of the probe assembly for instrument of FIG. 8;

FIG. 11    is a bottom-side perspective view of the instrument of FIG. 8 showing the sensor and power supply covers removed;

FIG. 12    is a bottom-side perspective and partially exploded view of the instrument of FIG. 8 showing the sensor and power supply removed,

FIG. 13    is block circuit diagram illustrating the configuration of components in a gas monitoring system utilizing the Absorptive-Photo-acoustic Infrared Gas Sensor according to the present invention, and

FIG. 14    is block circuit diagram illustrating an exemplary configuration of a computer used with the systems and methods according to the present invention.


Detailed Description

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting; but rather, to provide an understandable description of the invention.

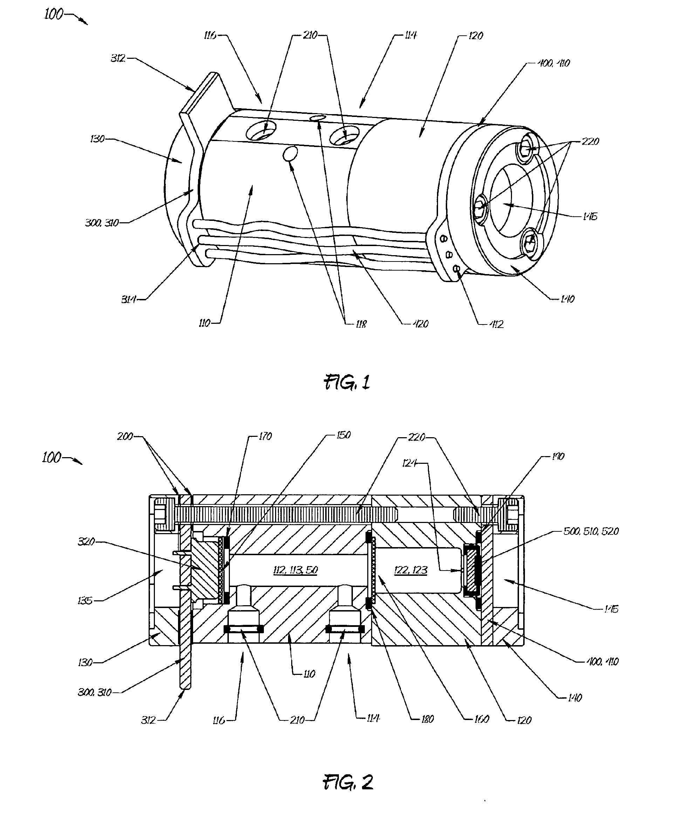

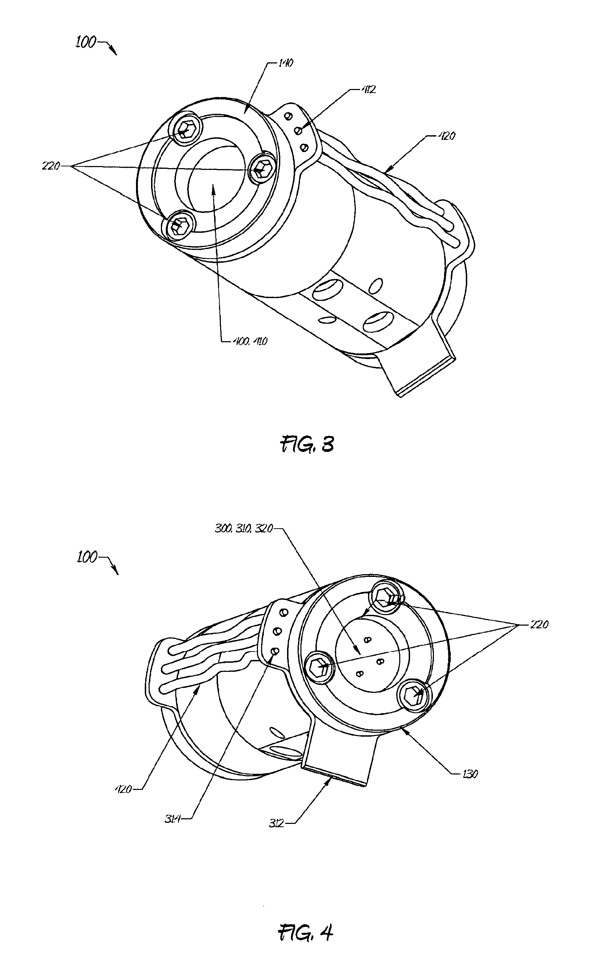

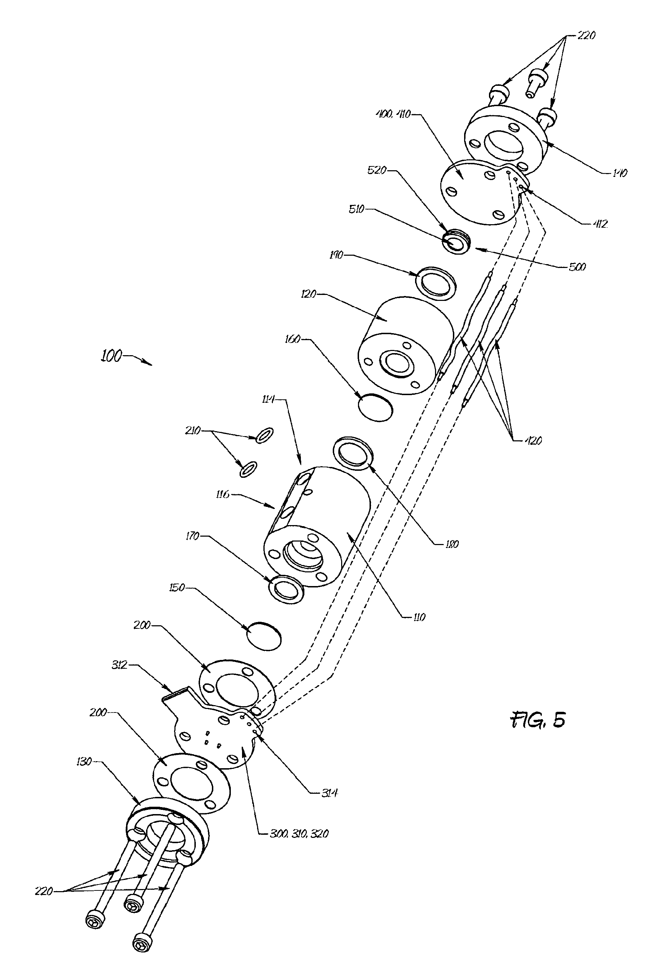

Embodiments herein can be implemented in a wide variety of ways using a variety of technologies that enable IR gas detection. Turning now to FIGS. 1 through 5, there is shown a sensor assembly 100 constructed of four machined components: a manifold 110, the reference body 120, and two end caps 130, 140. Each of these components is brass in the exemplary embodiment due to its inherent properties: ease of machining, cost, rust-proof, to name few. Of course, other materials can be used, such as aluminum, steel, or even molded plastic for extremely low-cost applications. Interposed among the machined components may be an IR Source PCB Assembly 300, a Pre-gain/Filter PCB Assembly 400, a microphone assembly 500, one or more optical windows 150, 160, various gaskets 170, 180, 190, and Nylon insulators 200. The components are secured together from each side with a respective set of fasteners 220 (e.g., #4-40 cap-head machine screws) shown well, e.g., in FIG. 5. Each set of screws 220 can be configured in a 3-screw-bolt circle pattern that is turned into threads within the reference body 120. In an exemplary embodiment where the overall longitudinal length of the sensor assembly 100 is approximately 50 mm (2"), the screws 220 on the manifold side may be 1.25 inches long, and the screws on the reference body 120 side may be 0.25 inches long. Steel, aluminum or other suitable material may be selected for the fasteners 220.

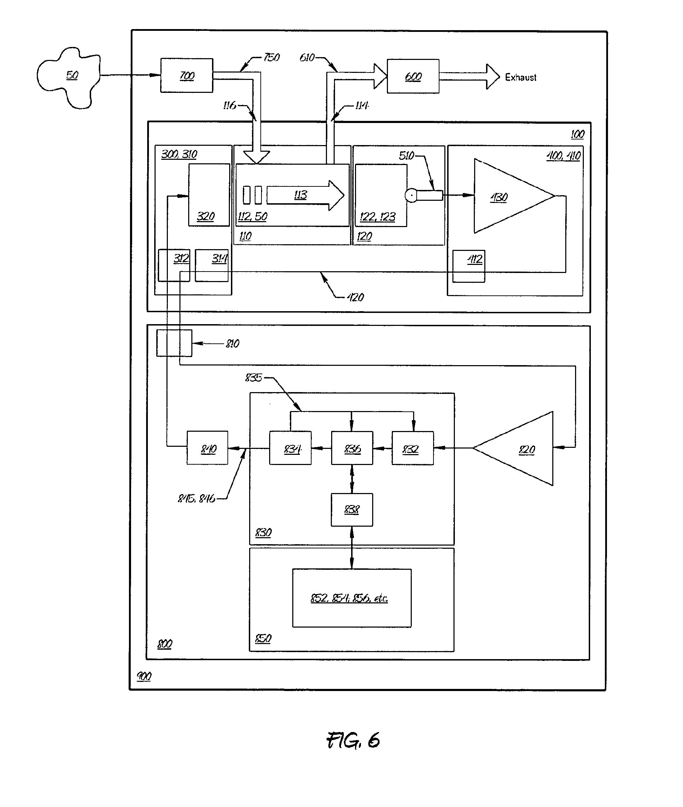

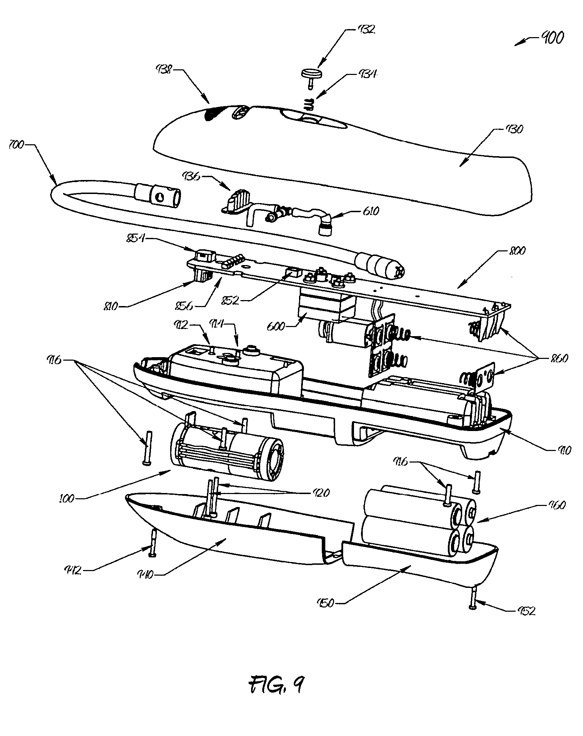

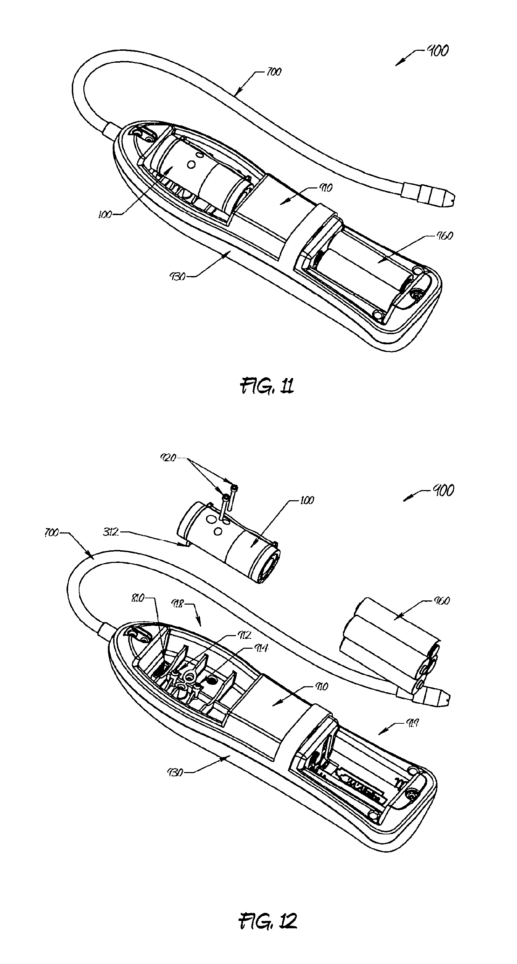

Machined into the manifold 110 is a sample chamber 112 through which sample gas 50 is drawn through an inlet port 116 by a suction pump 600 attached to the outlet port 114. See, e.g., FIG. 6. The sample gas 50 can be environmental air containing a contaminant or it can be a gas to be tested. A probe assembly 700 is attached to the inlet port 116. Gas-tight attachment devices for the sample gas drawing probe assembly 700 and the suction pump 600 can be seals 210 (e.g., o-rings) inserted into each port 114, 116. To insure maximum transmission of IR energy 113 down the length of the sample chamber 112, the inside surface of the sample chamber 112 may be polished and/or plated with a reflective material such as gold. The manifold 110 may have two mounting holes 118 through which two fasteners 920 (e.g., M2 cap-head machine screws) secure the assembled sensor 100 into a gas detection instrument 900 (see FIGS. 9 and 12).

An IR source PCB assembly 300 is disposed at the inlet port end of the manifold 110. The IR source PCB assembly 300 includes a printed circuit board (IR source PCB) 310 upon which an IR source 320 is mounted. The PCB 310 is held in place by one of the end caps 130, and may be electrically insulated from the end cap and the manifold with Nylon insulators 200. An IR passing optical window 150 (e.g., 9.5 mm diameter by 0.5 mm thick Sapphire Optical Window) may be used between the IR source 320 and the sample chamber 112, along with a seal 170 (e.g., buna-n, NBR, or similar rubber gasket), to isolate the sample gas 50 from the IR source 320. Alternatively, the IR source 320 may be procured with a window 150 already attached, alleviating the need for the gasket 170. In cases where it is not necessary to isolate the sample gas 50 from the IR source 320, the window 150 and/or the gasket 170 can be eliminated.

The cavity 135 created by the interface of the IR source PCB 310 and the end cap 130 may be filled with an epoxy based potting compound to prevent tampering with the sensor assembly 100.

With regard to the diagram of FIG. 6, an edge 312 of the IR source PCB 310 may be used to make electrical connection between the sensor assembly 100 and a card-edge connector 810 on a main system board 800 of the gas detection instrument 900. Additionally, contacts 314 on the IR source PCB 310 may be used to connect to like contacts 412 on the pre-gain/filter PCB 410 (described below) with interconnecting wires 420 to communicate electrical signals from the pre-gain/filter PCB 410 through the IR source PCB 310 and, subsequently, to the card edge 312, thereby allowing both IR source-driving signals and signals generated by the pre-gain/filter PCB 410 to emanate to/from the main system board 800 of the gas detection instrument 900 utilizing only one card-edge connector 810. The edge 312 of the IR source PCB 310 allows for a simple "press-fit" installation of the sensor assembly 100 into the gas detection instrument 900. See, e.g., FIGS. 11, 12.

The IR source 320 may be any device capable of emitting IR energy 113. Preferably, a low-thermal-mass device may be used that can be modulated at a rate of at least 10 Hz. As used herein, a low thermal mass source defined as a source capable of being modulated in the range of approximately 10 Hz to approximately 25 Hz. High thermal mass source defined as a source not capable of being modulated at greater than 5 Hz.) To minimize sensor size, a miniature IR source 320 that is available in a TO-5 Transistor Can package may be used.

Between the outlet port side of the manifold 110 and the reference body 120, an optical window 160 (e.g., a 9.5 mm diameter by 0.5 mm Sapphire Optical Window or other material) and gasket 180 (e.g., buna-n, NBR, Teflon or similar gasket) are sandwiched. The gasket 180 may be coated with low-vapor-pressure vacuum grease to eliminate any gas leaks that may occur due to surface finish irregularities on the reference body 120 or the manifold 110. The reference body 120 defines a reference chamber 122 therein. During manufacture, the reference chamber 122 is filled with a 100% concentration of the reference gas 123 through a pressure port 124 prior to application of a microphone assembly 500. To limit the quantity of IR energy 113 absorbed by the walls of the reference chamber 122, the walls of the reference chamber 122 may be polished and/or plated with a reflective material such as gold, similar to the sample chamber 112.

The outlet side of the sensor 100 contains a microphone assembly 500, which may include a microphone 510 and a pre-gain/filter PCB assembly 400 with its pre-gain/filter PCB 410, contacts 412 and interconnecting wires 420. After manufacture, pressure changes of the reference gas 123 in the reference chamber 122 are communicated to the microphone 510 through the pressure port 124.

The microphone 510 may be a standard off-the-shelf electret condenser-type microphone mounted in an elastomeric (rubber) microphone holder 520. The microphone 510, for example, may be a 6015 style (6.0 mm diameter by 1.5 mm thick) with sensitivities ranging from -46 db to -42 db. High sensitivity microphones (e.g., -42 db) require less IR energy for similar electrical output than low sensitivity versions.

The microphone assembly 500, and a seal 190 (e.g., buna-n, NBR, Teflon or similar gasket) are sandwiched between the reference body 120 and the pre-gain/filter PCB assembly 400, itself held in place by an end cap 140 and three screws. The gasket 190 may be coated with grease to prevent leaks of the reference gas 123 from the reference chamber 122. Electrical contact between the microphone 510 and the pre-gain/filter PCB 410 is made through conductive rubber contacts in the elastomeric microphone holder 520 and corresponding contacts on the pre-gain/filter PCB 410. The pre-gain/filter PCB assembly 400 may contain an AC coupled preamplifier and low pass filter circuit 430 to precondition the signal from the microphone 510 prior to communicating the output signal from the pre-gain/filter PCB 410 to the main system board 800 of the gas detection instrument 900 through the interconnecting wires 420, the IR source PCB 310, and the edge 312. The pre-gain/filter PCB 410 is configured such that the metal of the reference body 120 is electrically connected to the amplifier's common (ground) signal for low-noise operation.

The cavity 145 created by the interface of the pre-gain/filter PCB assembly 400 and the end cap 140 may be filled with an epoxy based potting compound to prevent tampering with the sensor assembly 100, to prevent diffusion of reference gas 123 through the material of the pre-gain/filter PCB 410, and to attenuate parametric changes of the pre-gain/filter components comprising the circuit 430 due to ambient condition (temperature, humidity) changes.

The heart of the system is the reference body 120 in which a 100% concentration sample of the reference gas 123 is sealed, during manufacture, at atmospheric pressure in the reference chamber 122 between an optical window 160, and a microphone assembly 500.

The optical windows 150 and 160 can be of any material that allows broadband IR energy to pass, such as, but not limited to, sapphire, calcium fluoride, zinc selenide, germanium, or silicon. A minimum requirement for the windows 150 and 160 is that they transmit IR wavelengths that coincide with at least one or more absorption peaks of the gas in question. For instance, carbon dioxide has a strong absorption peak around 4.5 $\mu$m. A low-cost sapphire window transmits all IR wavelengths up to about 5.0 $\mu$m. Therefore, sapphire is an ideal material for use in, for example, a carbon dioxide gas detector. Other window materials may be used for gases with absorption peaks in other ranges of IR wavelengths. Additionally, though not necessarily, the window(s) may be optically coated to narrow the band of IR energy passing through the window(s).

As broadband IR energy 113 is passed through the window 160, wavelengths that correspond to absorption peaks of the reference gas 123 in the reference chamber 122 are absorbed by the reference gas 123. This causes instantaneous heating of the gas, resulting in a pressure increase (similar to the Photo-acoustic Infrared Detection device). By pulsing the infrared source, sound pressure waves are created inside the reference chamber 122 at the same frequency of pulsed source. These sound pressure waves are transmitted to the microphone 512 through the pressure port 124 -- a small (e.g., 0.020") hole acoustically connecting the reference chamber 122 to the microphone 510. The magnitude of the pressure waves, and, therefore, the magnitude of the electrical signal produced by the microphone 510, is directly proportional to the quantity of energy absorbed by the reference gas.

Gas may be drawn continuously or periodically out of the outlet port 114 of the manifold 110 by suction pump 600, drawing sample gas 50 into the inlet port 116 and into the sample chamber 112. Any gas in the sample chamber 112 that is the same as the reference gas 123 will absorb some of the infrared radiation 113 radiated by the IR source 320 in the *same absorption bands as the reference gas 123,* thereby reducing the quantity of energy available to heat the reference gas 123. This will result in an instantaneous reduction of the sound pressure waves in the reference chamber 122, and likewise, the electrical signal from the microphone 510. The reduction in the electrical signal corresponds directly to an increase in concentration of the target gas in the gas sample in the sample chamber 112, according to the Beer-Lambert law.

374 Only sample gases that absorb precisely the same wavelengths as those that are absorbed by the reference gas 123 cause a reduction in the signal output. Therefore, the sensor assembly 100 becomes highly gas specific, *only detecting gases that are identical to the reference gas,* while ignoring all others, *and does so without the use of a specialized optical filter.* Cross-sensitivities to other gases are minimized (i.e., other gases may share small portions of the reference gas absorption spectrum, but not enough to create large signal changes for small concentrations). Gas selectivity is much higher than that of other technologies and is unaffected by changing ambient condition or parametric variations. In addition, the AC magnitude of the pressure waves, and likewise, the electrical signal emanating from microphone changes *instantaneously* with respect to changes in concentration of the reference gas in the sample gas. The thermal time-constant of a thermopile IR Detector no longer determines the maximum modulation frequency of the IR source.

Referring to FIG. 6, a complete gas detection system 900 utilizing the inventive Absorptive- Photo-acoustic Gas Sensor for either leak detection or monitoring applications includes a gas sensor assembly 100, as described above, and a main system PCB 800. The main system board 800 has an adequate source of power (e.g., batteries, AC line power), an analog signal front end (gain & band-pass filtering) 820, a CPU with integrated (or external) A/D 832 and PWM (pulse width modulation or pulse width modulator) 834 capabilities and software to perform the digital signal processing (DSP) computations 836, a power driver for the IR source 840, and a user interface 850.

The CPU 830 illustrated in the exemplary embodiment of FIG. 6 contains an integrated A/D converter 832 (for sampling the input signal) and a PWM converter 834 (for driving the IR source 320). This is a low or, even, lowest cost/ complexity solution. It is possible for the A/D and PWM converters to exist separately from the CPU. It is also conceivable that, with considerable effort, a similar application could be realized without any digital components at all. Therefore, a system utilizing the basic principles as described below, but utilizing a purely analog implementation is envisioned within the scope of the present invention.

The PWM 834 can be configured to generate a square-wave signal 845 of varying duty cycle that is presented to the IR source driver 840. The base frequency of the PWM 834 is chosen to optimize the detection speed and sensitivity of the system, taking into consideration the thermal time-constant of the IR source 320. For a system with a low thermal mass IR source, a base frequency of 10 Hz can be used to increase speed of detection. The duty cycle of the PWM 834 controls the power applied to the IR source 320 through the IR source driver 840, and may vary from 0% to 100% under control of the DSP 836. Duty cycles above 50% result in increased power dissipation by the IR source 320 without any significant gain in signal magnitude, thus, the practical range of PWM control is limited to 0% to 50%. Power dissipation limits of the IR source 320 may further limit the practical maximum of the PWM duty cycle. Additionally, a second stage of PWM modulation can be applied to the "on" period portion of the base PWM signal 845, generating a composite PWM signal 846. This allows ultra-fine tuning of the power applied to the IR source 320, thus permitting fine control of the magnitude of the signal emanating from the sensor 100. The second stage modulator can be adjusted effectively through the full range of 0% to 100%. Ideally, the one or two PWMs are adjusted programmatically to maximize the dynamic range of the signal output from the sensor 100.

When the two PWMs 834 are applied simultaneously, the resulting energy to be applied to the IR source 320 is proportional to the product of the two duty cycles. For instance, if the primary (course) modulator operates at a 12% duty cycle, and the secondary (fine) modulator operates at an 80% duty cycle, the resulting power to the IR source 320 is 9.6% of the total power the IR source 320 would see if both modulators were operating at 100%.

It is possible that one very high resolution (and expensive) PWM 834 could be used in place of the two stage PWM 834 and provide the same fine adjustment capability, but the two stage implementation is accurate, low-cost, and easy to implement through a single moderate-resolution PWM 834 integrated on the CPU 830 with addition computer code to generate the two stage capabilities.

While the PWM 834 controls the timing and power applied to the IR source 320, it also controls the timing 835 of the A/D converter 832 and the DSP 836 (described below). This allows for synchronous noise contained in the analog signal to be rejected during the signal processing phase.

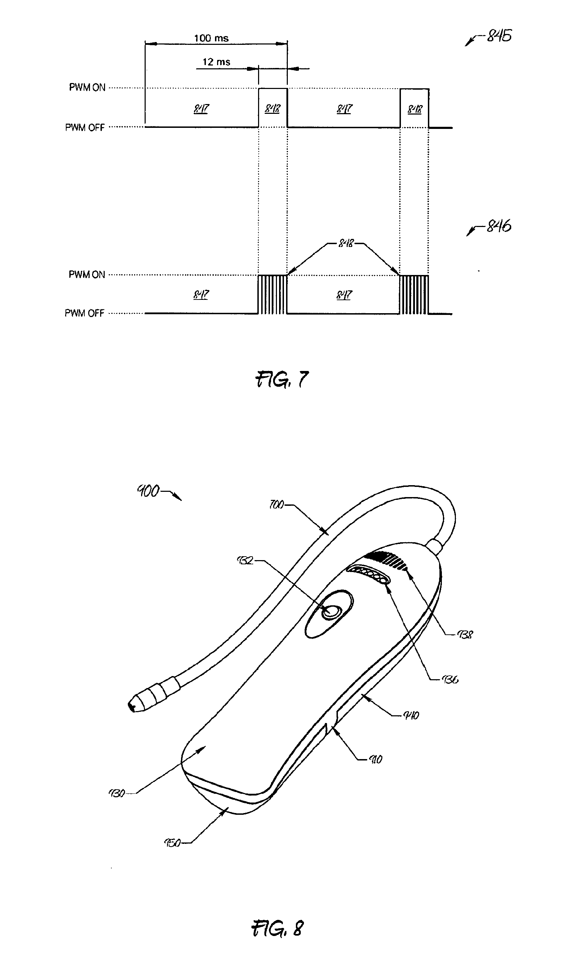

The PWM signal 845 or 846 is output to the IR source driver 840. This is simply a suitable regulated power supply circuit and a transistor switch that is closed and supplies current to the IR source 320 during the "on" period 847 of the PWM signal and is open and interrupts current to the IR source 320 during the "off" period 848 of the PWM signal. In the two stage PWM configuration, it is noted that during the major "off" period 847, the IR source 320 sees no power, but during the major "on" period 848, the IR source 320 sees power that is quickly switched on and off. The frequency of these minor on/off periods is high compared to the thermal time constant of the IR source 320, so all the IR source 320 really sees during the "on" period 848 is the average power of the driving signal. As a practical example, with the Coarse PWM having a base frequency of 10 Hz (slower than the thermal time constant of the IR source), the Fine PWM may have a base frequency of 1280 Hz (far faster than the thermal time constant). The above-described single and two-stage PWM modes are illustrated in the graphs of FIG. 7.

The IR energy 113 emanating from the modulated IR source propagates through the sample chamber 112 and into the reference chamber 122. Wavelengths of IR energy that correspond to the absorption bands of the reference gas 123 periodically heat the reference gas 123 creating sound pressure pulses at the base frequency of the Coarse PWM (e.g., 10 Hz). This causes a corresponding AC signal to emanate from the microphone 510 to the pre-gain/filter PCB assembly 400. The pre-gain/filter PCB assembly 400 may have a biasing circuit 430 to power the microphone 510, a DC blocking capacitor to eliminate any DC component from the microphone signal, followed by an amplifier and low-pass filter circuit. The amplifier and low-pass filter may have a gain of 50 and a 6db/octave roll-off with a 3db point at 47 Hz. The gain and filter characteristics are chosen to maximize the magnitude of the signal (e.g., 10 Hz) emanating from the pre-gain/filter PCB assembly 400 while attenuating any high frequency noise components that may cause the amplifier to clip and distort the signal. The resulting signal is an AC waveform with the fundamental frequency of the Coarse PWM.

This AC waveform, which may still contain noise in the form of harmonics of the Coarse PWM frequency, as well as mid-range noise not filtered by the low-pass filter, is propagated to the gain and band-pass filter circuit 820 of the gas detection instrument's main system board 800. This filter 820 may be a $2^{nd}$ $4^{th}$ or greater order band-pass filter having a passband centered about the fundamental frequency of the Coarse PWM (e.g., 10 Hz), with a bandwidth of about 2 Hz (e.g., 9 Hz to 11 Hz signals are passed, all others blocked). The filter 820 may have a passband gain of 6.4. The resulting signal at the output of this circuit is a clean, low-distortion AC signal with the frequency of the Coarse PWM and a magnitude determined by the IR source power (PWM Duty Cycle) and the amount of IR Power available to excite the target gas sample in the reference chamber 122.

Finally, the resulting signal can be directed to the CPU 830 where it can be digitized by the integrated A/D converter 832. The sampling rate can be chosen so that it is a multiple of the Coarse PWM rate (allowing for synchronous noise reduction and signal detection), and is high enough to satisfy the Nyquist Criterion. A sampling rate of 640 samples per second can be chosen, for example, resulting in a Nyquist Frequency of 320 Hz, more than one order of magnitude greater than the highest frequency expected to be passed by the band-pass filter. The A/D converter 832 can have a resolution of 10 bits or more, depending on the application.

The digital sample stream can be passed programmatically to the DSP 836, which can then handle PWM control, signal quantification, calibration, and detection. The magnitude of the digitized AC signal passed to the DSP contains all the information about the quantity of IR energy entering the reference chamber 122 and exciting the reference gas. AC waveforms (analog or digital) contain both a magnitude component and a phase component. To be useful, the magnitude information must be extracted and the phase information discarded. There are a number of common ways this extraction can be accomplished, each with its own shortcomings.

The simplest method for extracting the magnitude component is signal rectification and averaging (also known as envelope detection). This method is very slow (averaging must be done over many signal periods, perhaps tens of signal periods, to create a reasonably stable DC representation of the signal magnitude). This method is also prone to a great deal of error in the rectification process.

Peak detection is another basic method that can produce a quick result for increasing magnitudes, but it is slow for decreasing magnitudes as the output signal must decay significantly slower than the period of the AC waveform for clean operation. This method is also extremely sensitive to high frequency noise.

Envelope detection and peak detection are elementary techniques that are performed easily in the digital realm with low complexity computer code and insignificant processing power (with respect to low-cost common CPUs).

A more advance signal magnitude extraction method is referred to as "Lock-In" Amplification (also known as Synchronous Detection). In this method, the signal is "mixed" (mathematically multiplied) by a constant-magnitude sine wave (local oscillator or LO) of the same frequency. The product is, then, averaged over a long period of time to create a DC signal that is proportional to: (a) the magnitude of the AC signal; and (b) the phase of the AC signal with respect to the phase of the LO. Generally, synchronous detectors have a control to adjust the phase relationship between the signal and the LO so that the result of the mixing is maximized. This occurs when there is a 0° phase difference between the incoming signal and LO. By adding the capability to automatically track the phase of the incoming signal, phase dependence can be greatly attenuated. In low cost applications, a square wave LO may be used instead of a sine wave LO.

The major benefits of Synchronous Detection are accuracy and sensitivity. Depending on the time constant of the averaging filter, very small signal magnitudes can be extracted accurately from large amounts of noise. The two major drawbacks are speed (a significant amount of averaging is needed) and phase noise (sensitivity to changes in phase relationship between signal and LO). Synchronous Detection generally requires a moderate amount of processing power to perform digitally (via computer program) and the complexity rises significantly as various kinds of phase compensation techniques are added. Synchronous detection can be implemented with both analog and digital solutions.

Quadrature Detection can be used to eliminate the phase sensitivities that affect the Synchronous Detector. In such a method, the signal is multiplied by two local oscillators operating in quadrature (90 degree phase difference between each of the two LO signals). One LO is called the Sine Oscillator and the other is called the Cosine Oscillator. The base frequency of each LO is the same as the signal to detect, just as in the Synchronous Detector. The two multiplication products are averaged over a long time and are subsequently combined as a complex number, the averaged sine product value being the real component and the averaged cosine product being the imaginary component. This complex result now contains both the magnitude and phase information of the original waveform. Extracting the magnitude information is now a simple case of determining the phaser magnitude of the complex number, which is discovered through applying the Pythagorean Theorem:

$$Magnitude = \sqrt{(\text{real component})^2 + (\text{imaginary component})^2}$$

As in Synchronous Detection, two square waves operating in quadrature may be used instead of sine waves for ease of generation or computation.

A great benefit of Quadrature Detection is that it requires no compensation for the phase of the incoming signal and is insensitive to phase noise. At the same time, it possesses the same accuracy and sensitivity qualities of Synchronous Detection. Unfortunately, averaging over many signal periods is still required, causing a slow response. Additionally, Quadrature Detection in the digital realm is generally very expensive in terms of computational complexity and processing power. Quadrature Detection can be implemented with both analog and digital solutions.

Based upon the above, it was determined that a need existed to have an algorithm that quickly extracted the magnitude information from an AC waveform and that also possessed the accuracy, sensitivity, and phase insensitivity of a Quadrature Detector. Still, it was desired to have this algorithm be computationally simple enough to be implemented on a low-cost microprocessor.

One of the benefits of converting the continuous analog AC waveform into discrete digital samples is that a sample rate can be chosen so that there is a known number of samples generated for each period of the waveform. Therefore, a computer algorithm could be written to compute a quadrature computation of signal magnitude for one full period without averaging over many periods. For example, if the fundamental frequency of the AC waveform is 10 Hz, and 640 samples are generated per second, there will be 64 samples generated for each period of the waveform. These 64 values can be mixed with the sine and cosine quadrature waveforms, averaged over the full period, and combined to create the complex value from which the magnitude information of that period of the waveform can be calculated. For these signal characteristics and sample timing, this would result in 10 accurate magnitude calculations every second. These 10 resulting values can be further.digitally filtered to smooth out remaining high-frequency artifacts, resulting in a 10 Hz train of digital values representing the RMS magnitude of the original AC waveform that can be passed on for further processing.

While this results in an order of magnitude improvement of detection speed over traditional methods, it was discovered that this rate can be improved further. If the data in a "moving window" of the previous 64 samples could be used as the data set for computing each sample period (as opposed to each signal period), this would result in 640 accurate magnitude data points every second, representing yet another order of magnitude increase in detection speed. Unfortunately, this process requires a sine and cosine multiplication each sample period, a mathematical average of 128 data elements (64 sine and 64 cosine), and a phaser magnitude computation. Generally, math of this sort is complex enough to rule out implementation in low-cost microprocessors. Nonetheless, it has been determined that the algorithm of the invention performs the computations as described above, but with a complexity sufficiently low enough to be implemented efficiently on a low-cost microprocessor. This inventive algorithm is referred to herein as Fast Digital Quadrature Detection.

The Fast Digital Quadrature Detection algorithm utilizes two accumulators (set of microprocessor registers), one for a sum of sines and one for a sum of cosines, and two arrays, each 64 words long, again, one for sines and one for cosines. The arrays are set up as circular buffers. Rather than computing sine and cosine values for each sampled data point, a determination is made programmatically whether to add or subtract the new sample value from each of the two accumulators based upon the sample number. For an AC waveform of 10 Hz, and a sample rate of 640 samples per second, there will be 64 sample points in each complete period of the AC waveform. These sample points are numbered 0 through 63. For the sine function, the sampled value is added to the sine accumulator for sample numbers 0 through 31 and subtracted from the sine accumulator for sample numbers 32 through 63. For the cosine function, the sampled value is added to the cosine accumulator for sample numbers 0 through 7 and 48 through 63, and subtracted from the cosine accumulator for sample numbers 8 through 47. These additions and subtractions simulate the multiplication of the AC waveform by two unity magnitude square waves in quadrature (e.g., 90 degree phase difference). Additionally, the sampled value, or its negative, are placed in each circular buffer, though the sign is computed as opposite of the above determination. For instance, for sample numbers 0 through 31, the *negative* of the sample value is stored in the sine circular buffer. Prior to the above addition or subtraction, the *oldest* values in the circular buffers, which represent the inverse values of the corresponding sample number from the previous waveform period that were added to the accumulators 64 samples ago, are added to the sine and cosine accumulators, prior to being replaced by the new values. In this way, the sine and cosine accumulators always contain complete sine and cosine sums (averages) over a full signal period without needing to re-compute the sum of all 128 (two sums of 64) values every sampling period, thus resulting in a dramatic reduction in computational power. Finally, a phaser magnitude of the sums is computed each sample period as set forth in the following text.

If a is the value of the sine accumulator and b is the value of the cosine accumulator, then the Phaser magnitude c of a+bi is:

$$c = \sqrt{a^2 + b^2}$$

which is equivalent to:

$$c = 2^{\left(\frac{\log_2(a \cdot a + b \cdot b)}{2}\right)}$$

This formula, while appearing complex, is easy and efficient for a low cost microprocessor to perform based upon the following algorithm:

- compute the products a*a and b*b;
- compute the sum of the products;
- compute the base 2 logarithm of the sum through lookup tables, piece-wise approximation, and binary shifting;
- compute the quotient of the logarithm divided by 2 through a single binary right shift;
- compute the final magnitude by raising 2 to the power of the resulting quotient through look-up tables, piece-wise approximation, and binary shifting.

As a result of the Fast Digital Quadrature Detection of the invention, one new computation that accurately reflects the magnitude of the AC waveform for the last 64 samples is complete every sample period, or 640 times per second. The resulting data stream looks like a DC signal representing the time varying RMS value of the AC signal that can be further processed utilizing traditional digital signal processing techniques.

The data stream generated by the Fast Digital Quadrature Detection algorithm can be used to calibrate the system through the one and two-stage PWMs. The method of calibration can be chosen based upon the type of gas detection system (e.g., gas monitor or leak detector), and the likelihood that the target gas is assumed to be present in the gas sample during calibration.

Once calibrated, the data stream may be further processed by the microcontroller in various ways depending on the application (gas leak detection, gas monitoring, etc.). The results of the processing can be indicated to the operator via the microprocessor's I/O ports 838 through the user interface 850, which may be comprised of such devices as a loud-speaker 854 for audible indications, electronic indicators 856, e.g., LED displays, LED arrays, LCD graphical, alphanumeric, or bar graph displays, or any kind of mechanical, optical, or audible signaling devices 858, e.g., vibrators. The data stream could also be sent directly to a host computer system or microprocessor via a network or other type of connection (including wireless) for further processing, recording, transmitting or displaying of gas concentration information. The user interface 850 may also contain a number of input devices 852 to control the operation of the gas detection instrument, such as push buttons, tactile or touch switches, touch screens, keyboards or keypads, potentiometers, or analog controls. Provisions for remote control through a computer network (including wireless) or a host computer could also be provided through the user interface 850.

Based on the foregoing specification, the invention may be implemented using computer programming or engineering techniques including computer software, firmware, hardware or any combination or subset thereof. Any such resulting program, having computer-readable code means, may be embodied or provided within one or more computer-readable media, thereby making a computer program product, i.e., an article of manufacture, according to the invention. The computer readable media may be, for instance, a fixed (hard) drive, diskette, optical disk, magnetic tape, semiconductor memory such as read-only memory (ROM), etc., or any transmitting/receiving medium such as the Internet or other communication network or link. The article of manufacture containing the computer code may be made and/or used by executing the code directly from one medium, by copying the code from one medium to another medium, or by transmitting the code over a network. One skilled in the art of computer science will easily be able to combine the software created as described with appropriate general purpose or special purpose computer hardware to create a computer system or computer sub-system embodying the method of the invention. An apparatus for making, using or selling the invention may be one or more processing systems including, but not limited to, a central processing unit (CPU), memory, storage devices, communication links and devices, servers, I/O devices, or any sub-components of one or more processing systems, including software, firmware, hardware or any combination or subset thereof, which embody the invention. User input may be received from the keyboard, mouse, pen, voice, touch screen, pushbuttons, or any other means by which a human can input data into a computer, including through other programs such as application programs.

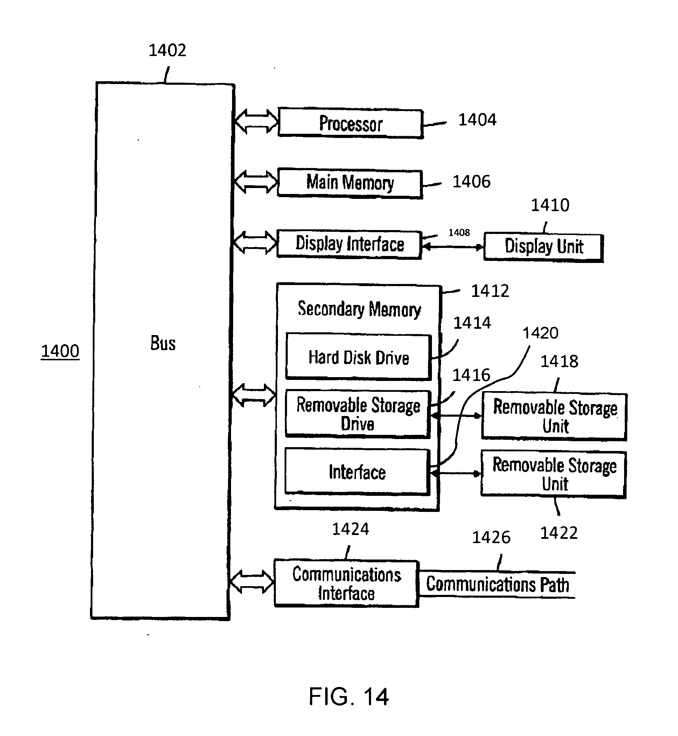

FIG. 14 is a block diagram of a computer system useful for implementing an embodiment of the present invention. The computer system includes one or more processors, such as processor 1404. The processor 1404 is connected to a communication infrastructure 1402 (e.g., a communications bus, cross-over bar, or network). Various software embodiments are described in terms of this exemplary computer system. After reading this description, it will become apparent to a person of ordinary skill in the relevant art(s) how to implement the invention using other computer systems and/or computer architectures.

The computer system can include a display interface 1408 that forwards graphics, text, and other data from the communication infrastructure 1402 (or from a frame buffer not shown) for display on the display unit 1410. The computer system also includes a main memory 1406, preferably random access memory (RAM), and may also include a secondary memory 1412. The secondary memory 1412 may include, for example, a hard disk drive 1414 and/or a removable storage drive 1416, representing a floppy disk drive, a magnetic tape drive, an optical disk drive, etc. Removable storage drive 1416, reads and writes to a floppy disk, magnetic tape, optical disk, etc., storing computer software and/or data. The system also includes a resource table 1418, for managing resources $R_1$-$R_n$ such as disk drives, disk arrays, tape drives, CPUs, memory, wired and wireless communication interfaces, displays and display interfaces, including all resources shown in FIG. 14, as well as others not shown.

In alternative embodiments, the secondary memory 1412 may include other similar means for allowing computer programs or other instructions to be loaded into the computer system. Such means may include, for example, a removable storage unit 1422 and an interface 1420. Examples of such may include a program cartridge and cartridge interface (such as that found in video game devices), a removable memory chip (such as an EPROM, or PROM) and associated socket, and other removable storage units 1422 and interfaces 1420 which allow software and data to be transferred from the removable storage unit 1422 to the computer system.

The computer system may also include a communications interface 1424. Communications interface 1424 acts as both an input and an output and allows software and data to be transferred between the computer system and external devices. Examples of communications interface 1424 may include a modem, a network interface (such as an Ethernet card), a communications port, a PCMCIA slot and card, etc. Software and data transferred via communications interface 1424 are in the form of signals which may be, for example, electronic, electromagnetic, optical, or other signals capable of being received by communications interface 1424. These signals are provided to communications interface 1424 via a communications path (i.e., channel) 1426. This channel 1426 carries signals and may be implemented using wire or cable, fiber optics, a phone line, a cellular phone link, an RF link, and/or other communications channels.

In this document, the terms "computer program medium," "computer usable medium," and "computer readable medium" are used to generally refer to media such as main memory 1406 and secondary memory 1412, removable storage drive 1416, a hard disk installed in hard disk drive 1414, and signals. These computer program products are means for providing software to the computer system. The computer readable medium allows the computer system to read data, instructions, messages or message packets, and other computer readable information from the computer readable medium. The computer readable medium, for example, may include nonvolatile memory, such as Floppy, ROM, Flash memory, Disk drive memory, CD-ROM, and other permanent storage. It is useful, for example, for transporting information, such as data and computer instructions, between computer systems. Furthermore, the computer readable medium may comprise computer readable information in a transitory state medium such as a network link and/or a network interface, including a wired network or a wireless network, that allow a computer to read such computer readable information.

Computer programs (also called computer control logic) are stored in main memory 1406 and/or secondary memory 1412. Computer programs may also be received via communications interface 1424. Such computer programs, when executed, enable the computer system to perform the features of the present invention as discussed herein. In particular, the computer programs, when executed, enable the processor 1404 to perform the features of the computer system. Accordingly, such computer programs represent controllers of the computer system.

FIG. 8 illustrates an exemplary embodiment of a hand-held gas leak detection instrument 900 according to the invention. As shown in FIG. 9, top and bottom shells 930 and 910, respectively, are assembled with screws 916 to form a small, ergonomic, and easy-to-wield package. A sensor compartment cover 940 and power-supply compartment cover 950, fastened with captured-screws 942 and 952, respectively, to the bottom shell 910 complete the instrument envelope and provide easy access for installation/removal of the sensor 100 and power supply 960 (e.g., AA batteries). The shells 910, 930 and the covers 940, 950 may be molded of plastic (ABS, polycarbonate, or other materials).

The top shell 930 may include a plastic or other material cosmetic pushbutton 932 and its spring 934 for controlling the operation of the instrument and a plastic or other material transparent light-pipe 936 for providing visual operational and leak information to the operator. Of course, this embodiment is only exemplary and any other operational controls are envisioned. A speaker grill 938 may be formed into the top shell 930 (or other places) for transmitting audible information to the operator.

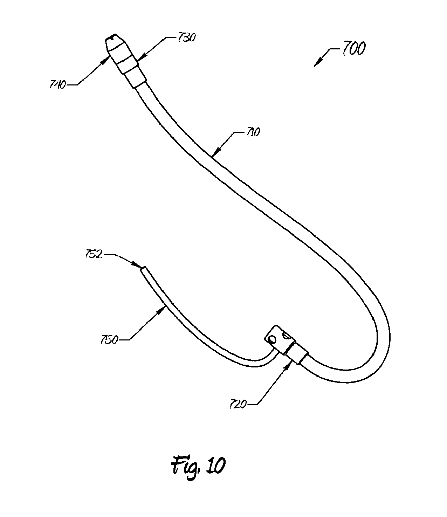

The bottom shell 910 may be formed with a sensor compartment 918 and power supply compartment 919 (FIG. 12) to contain the sensor 100 and the power supply 960, respectively. Battery contacts 860 may be installed to electrically connect the terminals of the batteries of the power supply 960. Also formed into the bottom shell 910 may be two gas connectors 912 and 914, coupling the inlet port 116 and outlet port 114 of the sensor 100 to the probe sample hose 750 (FIG. 10) of the probe 700 and the plumbing assembly 610, respectively.

The probe assembly 700, as shown in FIG. 10, includes a probe body 710 constructed of a steel or other material gooseneck (for flexibility), an aluminum or other material anchor bushing 720 for securing the probe assembly to the instrument, and an aluminum or other material threaded bushing 730 for securing a probe cap 740 in place. A flexible vinyl or other material sample hose 750 may be threaded down the length of the probe assembly providing a defined path for sample gas to flow from the probe tip into the instrument. A vinyl or other material cover may be formed over the gooseneck exterior for cosmetic purposes. Housed within the threaded bushing 730, and held in place by the probe cap 740, may be a filter to prevent dirt, dust, or moisture from being drawn down probe hose 750 and into the instrument. The probe assembly 700 is secured to the top and bottom shells 930 and 910 by the anchor bushing 720 and one of the screws 916. The sample hose end 752 is attached to the gas inlet connector 912, which completes the sample gas flow path into the sensor 100.

Housed within the cavity formed by the top and bottom shells 930 and 910 are the various electrical and mechanical components to complete the instrument assembly. These include a circuit board assembly 800, a suction pump 600, and a plumbing assembly 610. The suction pump 600 may be secured within the body of the instrument 900 or, as shown in FIG. 9, mounted upon the circuit board assembly 800 to simplify the assembly process.

In addition to the suction pump 600 as described above, the circuit board assembly 800 may also include some or all of the battery contacts 860 to provide power from the battery terminals of the power supply 960 to the electronic components of the circuit board assembly, a card-edge connector 810 for electrically connecting card edge 312 of sensor 100 to the circuit board assembly 800, a switch 852 (mechanically connected to pushbutton 932) for controlling the operation of the instrument 900, a loud-speaker 854 for producing audible information to the operator through speaker grill 938, and LED indicators 856 for producing visual information to the operator through light-pipe 936. Also included on the circuit board assembly 800, though not shown in FIG. 9, are the analog signal front end components 820, the CPU component 830 (with its internal A/D converter 832, PWM converter 834, DSP software 836, and I/O 838), and the IR Source Driver components 840. The card edge connector 810 may protrude through an opening in the bottom shell 910 into the sensor compartment 918 to facilitate electrical connection between the card edge 312 of the sensor 100 and the card edge connector 810 of the circuit board assembly 800.

The gas outlet connector 914 may be connected to the inlet port of the suction pump 600 via the plumbing assembly 610, which may be a flexible vinyl or other material hose, and proper fittings. The plumbing assembly 610 may also include other devices as necessary to limit the rate of flow of sample gas drawn through the sensor, such as flow restrictors or other devices. The plumbing assembly 610 completes the sample gas flow path from the outlet port of the sensor 100, through the gas outlet connector 914, and to the suction pump 600. The outlet port of the suction pump 600 may exhaust directly into the body of the instrument 900, or be ported to the exterior of the body with additional, non-illustrated, plumbing assemblies. The flow rate through the sample gas flow path, as determined by the plumbing assembly 610 and the capabilities of the suction pump 600, should be high enough for fast detection, but low enough to prevent small leaks from being diluted and making detection difficult. Flow rates between 100 and 500 sccm, for example, provide an acceptable trade-off between detection speed and sensitivity.

Referring to FIGS. 11 and 12, removal and replacement of the sensor 100, or power supply 960, from/to the instrument 900 is clearly illustrated. To replace the sensor 100, the operator removes the sensor compartment cover 940 by loosening the captured screw 942, revealing the sensor 100 in the sensor compartment 918. He then removes two screws 920, allowing the sensor 100 to be pulled freely from the sensor compartment. A new sensor is then pressed in place in the sensor compartment, automatically making electrical contact between the IR Source card edge 312 of the sensor 100 and the card edge connector 810 of the circuit board 800. Gas connections are also created between the inlet and outlet ports 116, 114 of sensor 100 and the gas inlet and outlet connectors 912, 914 of the bottom shell 910 of the instrument 900. Seals 210 of the sensor 100 ensure a gas-tight fit of the ports 116 and 114 to the connectors 912 and 914. Finally, the screws 920 are replaced securing the sensor 100 to the instrument 900, and the sensor compartment cover is installed and secured in place by captured screw 942.

The power supply 960 batteries are replaced in a similar fashion. The operator removes the power supply compartment cover 950 by loosening the captured screw 952, revealing the power supply 960 batteries. The depleted batteries are then removed and replaced with fresh batteries. Finally, the power supply compartment cover 950 is installed and secured in place by captured screw 952.

In one embodiment, all aspects of the operation of the exemplary leak detection instrument 900 are controlled by the operator through the single switch 852 by the pushbutton 932, including power-on, power off, sensitivity changes, and reset. Operational conditions are indicated visually by the LED indicators 856 through the light-pipe 936 and audibly by the loud-speaker 854 through the speaker grill 938.

To operate the instrument 900, the operator presses the pushbutton 932, which begins a power-on sequence. The power-on sequence causes activation of the suction pump 600 and all of the electronic components of the circuit board assembly 800, and may include an initial warm-up sequence, followed by an automatic calibration sequence. The power-on sequence condition may be indicated to the operator visually through the LED indicators (by a scanning pattern) and audibly through the speaker (by a specific pattern of beeps).

At the initiation of the warm-up sequence, the one- or two-stage PWM 834 duty cycle is set with initial values. For instance, the fine PWM of the two stage PWM may be set to 80%, and the Course PWM of the two stage PWM may set to 25%. This begins driving the IR Source 320 through the IR Source driver 840, creating sound pressure pulses in the reference chamber 122 and an AC electrical signal from the microphone 510 to the A/D converter 832 via the pre-gain filter PCB assembly 400 and analog front end 820. This signal is allowed to settle for a short time (1 or 2 seconds) as the electronics stabilize and the sample chamber 112 is cleared with environmental air (which may or may not contain background contamination of the target gas) drawn through the probe 700. At the completion of this time period, the instrument initiates the calibration sequence of operation.

To maximize the dynamic range (i.e., the range of gas concentrations that can be accurately measured) of the gas detection instrument, it is necessary that the magnitude of the AC signal presented to the A/D converter 832 be as large as possible without exceeding the maximum allowable input range of the converter. For instance, if the A/D converter has an input voltage range of 0 to 3 VDC, the magnitude of the signal presented to the converter must not exceed 3 VAC p-p (peak to peak). This magnitude can be adjusted by adjusting the duty cycle values of the PWM 834. For ease of operation, the software of the instrument may automatically adjust these values during the calibration sequence of the power-on sequence. This sequence may be comprised of a series of successively smaller steps, each step resulting in a closer approximation of the PWM duty cycle values required for optimal operation. This method is referred to as Successive Approximation.

During each step of the successive approximation calibration sequence, the RMS value of the AC voltage is computed (via the Fast Digital Quadrature Detection algorithm), the value is compared against a target value that represents the RMS value of a maximal AC signal (e.g., -3 VAC p-p), and a decision is made to either increase the Course PWM duty cycle (if the computed value is less than the target value) or decrease the Course PWM duty cycle (if the computed value is greater than the target value). This procedure is performed exhaustively to the ultimate resolution of the Course PWM converter. Finally, the Fine PWM duty-cycle is adjusted in the same fashion. Upon completion of this calibration sequence, each of the Course and Fine PWM operate at the optimal duty cycle values to produce an optimal magnitude AC signal presented to the A/D converter. The final computed RMS value, which is reasonably close to the target value, may be stored in the CPU memory as a "reset" value; that is, the value that represents the sensor signal when no concentration of target gas exists *that is greater than the ambient background concentration.* In the case of a carbon dioxide gas detector, for instance, this will allow optimal calibration of the instrument even in the presence of the always present background contamination of 350 to 400 ppm or more.

As an additional benefit, it is possible, during the calibration sequence, to determine that the sensor 100 and, therefore, the instrument is operating within its specifications. As the sensor ages, long term detrimental effects may occur such as IR Source degradation or dust, dirt or moisture collecting on the reflective surfaces of the sample chamber 112 or on the transmitting surfaces of the windows 150 and 160. These effects will result in an increase over time of the amount of power required to be emitted by the IR Source to produce the optimal magnitude A/C signal. If, during the sequence, it is discovered that the Course PWM duty cycle must exceed a value that may safely be presented to the IR Source (for instance, 40%), then the instrument will automatically turn off power to the IR Source (to prevent further damage to the sensor and/or instrument), and alert the operator to a problem, for example, via the LED indicators and an audible alarm. In this way, the operator may be assured that the instrument is operating within its specifications and will have the opportunity to replace the sensor before proceeding. It has been discovered that, in the exemplary leak detection instrument, a proper operating range of duty cycles (the product of the Course PWM and Fine PWM duty cycles) may vary between 8% (new sensor) and 40% (aged sensor). This wide range allows for significant sensor degradation to occur over long periods of time before the sensor must be replaced. In addition, the low duty cycles (e.g., less than 40%), combined with a low thermal mass IR Source, allow for long power supply (battery) life (up to 20 hours), even with small AA batteries.

The entire power-on sequence, including warm-up and calibration, may require as few as 10 seconds to perform, after which the instrument begins the measurement phase of operation. At the initiation of the measurement phase, the instrument may automatically set its sensitivity level to a "high" level and emit a constant beeping sound and blinking LED to indicate to the operator that the instrument is functioning properly.

At the "high" level of sensitivity, a predetermined threshold is chosen that represents some RMS value less than the "reset" RMS value. Any time the concentration of target gas in the sample chamber increases to cause the sensor signal RMS value to drop to less than the threshold, the instrument may alert the operator, for example, by increasing the pitch and rate of the alarm proportionally to the amount the sensor signal RMS values decreases below the threshold. The LED indicators may also light in a similarly progressive fashion. This method of alerting the operator not only provides information regarding the presence of increasing concentrations, but also is a qualitative interpretation of the amount of the increase. There may also be one, or more, lower levels of sensitivities, which may require greater changes in concentration to produce the same level of alarm. The various preset sensitivities may be selected by the operator, for example, by "double-clicking" (e.g., like a computer mouse) the pushbutton 932. In an alternative embodiment, an analog potentiometer or dial control device could be included to adjust the instrument through a continuous range of sensitivities.

In addition, the operator may choose to silence the alarm at the current level of concentration, causing the instrument to alarm only at even greater levels of concentration. He could do this by quickly depressing the pushbutton, causing the current sensor signal RMS value to replace the previous "reset" value stored in the CPU memory. This function is referred to herein as "Reset".

The instrument may be powered-off, for example, by pressing and holding the pushbutton for a short time (e.g., one-half second). It should be recognized that, in the exemplary embodiment, all of the operational features, while controlled by a single pushbutton, could also be controlled by a plurality of push-buttons or controls, each controlling one or more of the distinct features.

During the operation of the instrument, parametric and environmental changes may cause the AC signal presented to the A/D converter to drift slowly away from the optimal target value, even as the concentration of target gas in the sample chamber remains constant. This condition can be recognized by the CPU, which may automatically make slow, minor adjustments to the Fine PWM duty cycle value to maintain optimal performance.

A practical application for the instrument of the exemplary embodiment described above is gas leak detection, where small gas leaks from a pressurized vessel must be identified and located. Typically, a technician would power the instrument away from the vessel or other sources of target gas and wait for the completion of the power-on sequence. Subsequently, the probe tip is moved to a suspected leak (for example, within ¼ inch) slowly (for example, at less than 2 inches per second). An alarm would indicate the presence of a leak (increased gas concentration at the tip of the probe) if such a leak was detected. In the case of larger leaks, the operator could change controls of the instrument to a lower sensitivity and/or use the "Reset" feature to enable the operator to zero into the exact location of the leak. Knowing the exact location of the leak(s), repairs can be effected and the vessel can be rechecked to confirm satisfactory condition.

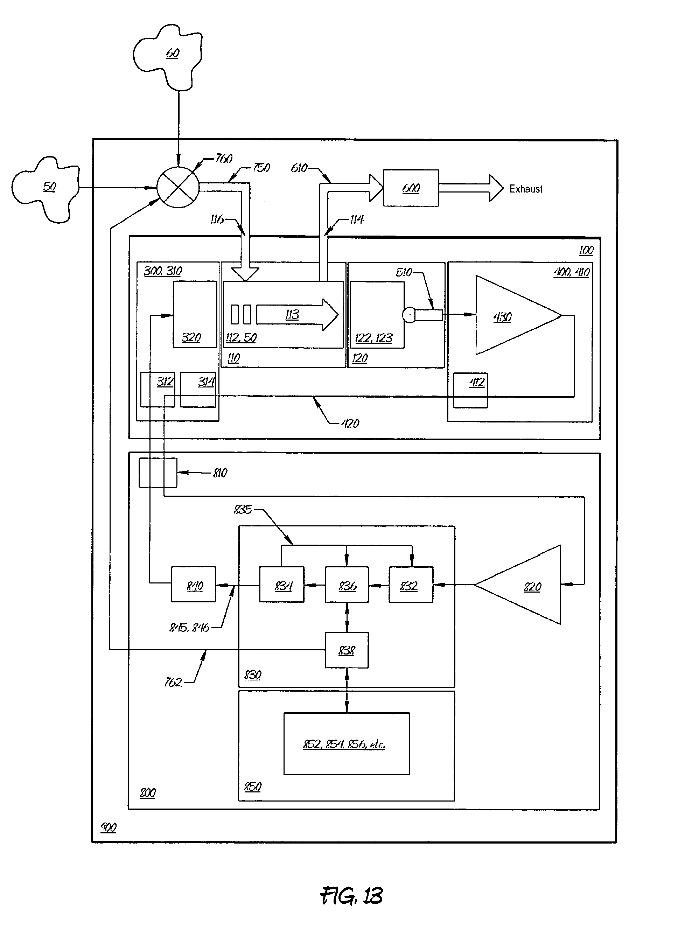

FIG. 13 illustrates yet another exemplary embodiment according to the invention; in this case, a gas monitor. Gas monitoring differs from that of gas leak detection in that a gas monitor, instead of identifying rapid changes in gas concentration, should accurately quantify gas concentrations at a particular location and alert an operator when the concentration exceeds a preset limit or set of limits. A gas monitor is typically expected to operate autonomously over long periods, only requiring intervention when gas concentration limits are exceeded or for maintenance purposes.

The gas monitor instrument 900 is constructed similarly as the leak detection instrument in an enclosure adapted to the environment in which the monitor is expected to operate. It included a sensor 100 and its corresponding component parts, a main circuit board 800 with its CPU 830, analog and IR driving components 820 and 840, and a user interface 850. The user interface may contain similar indicating devices as the leak-detecting device, including LED and/or LCD indicators, arrays, and displays, and audible signaling devices (loud speaker). It may have one or more pushbuttons, keypads, or other controls to control the operation of the instrument. It may also be connected to a host computer or other devices via wires or a network (wireless or otherwise) for remote control by a host computer system, and subsequent processing, storing, displaying, or transmitting the gas concentration information.

The probe assembly 700 may be replaced with a two-way gas valve 760 (or two or more one-way gas valves that may be operated alternately). One intake of the gas valve(s) may be connected to a source of calibration gas 60 that is known to not contain the target gas (e.g., external environmental air), and the other intake may be connected to the environmental gas being monitored 50. The outlet of the valve(s) may be directed to the inlet port 116 of the sensor 100 to thereby direct gases 50 or 60 into the sample chamber 112. The valves 760 may be controlled automatically by the CPU 830 through control signals 762 via the CPU I/O 838, such that, in one mode of operation (calibration mode), calibration gas 60 is drawn into the sample chamber 112 and, in another mode of operation (analysis mode), environmental gas 50 is drawn into the sample chamber 112. In yet another variation, the calibration gas 60 may be a known concentration of target gas (including zero concentration) delivered from a gas cylinder, gas bag, or other source.

The gas monitor instrument 900 may be situated in an area where gas concentration information is to be collected and analyzed. Periodically (e.g., once per minute, hour, day, or longer), or continuously, the CPU 830 may cause a measurement cycle to occur. Each measurement cycle may include a calibration phase and an analysis phase of operation.

In one exemplary method of operation, the calibration phase may include the following steps: switching the valve(s) 760 to direct calibration gas 60 into the sample chamber 112 of sensor 100; turning on the suction pump, 600 thus drawing calibration gas into the sample chamber; and activating a warm-up and calibration cycle of the IR Source 320 through the PWM 834 via the IR Source driver 840 (thereby determining the PWM duty-cycle value that causes the optimal sensor signal to be presented to the A/D converter 832 in the presence of the known concentration of gas (which may be zero) in the calibration gas). The resulting RMS signal (as computed via the Fast Quadrature Detection Algorithm), may be stored as the RMS value which represents the known concentration of the calibration gas.

In the calibration phase of yet another method of operation, a predetermined PWM duty-cycle (programmed during manufacture or stored previously by a manual or automatic calibration cycle) that represents the optimal RMS signal for a known gas concentration is set, thereby avoiding the need to sample calibration gas each analysis cycle. A predetermined RMS value represents the RMS signal expected for the concentration of the calibration gas sampled in a previous calibration cycle.

Upon completion of the calibration phase, an analysis phase of operation is initiated. The valve 760 is switched by CPU 830 to direct environmental gas 50 into the sensor 100. After a short time, a new RMS value is computed that represents the magnitude of the AC sensor waveform in the presence of the environmental gas, and the concentration of the target gas in the environmental gas is calculated by applying the Beer-Lambert equation, utilizing coefficients predetermined during design and/or manufacture of the sensor.

The gas concentration may then be displayed by the user interface, transmitted to a host computer, and/or compared with one or more pre-programmed set point(s) which may activate an alarm to alert the operator if the gas concentration exceeds those level(s).

Finally, the CPU may power-off the instrument to conserve power supply energy, and await the next analysis period.

It should be understood that the examples and embodiments described herein are for illustrative purposes only and that various modifications or changes in light thereof will be suggested to persons skilled in the art and are to be included within the spirit and purview of this application.

**Claims**

1. A gas sensor for sensing the presence of at least one predetermined gas, the gas sensor comprising:

   - an IR source;
   - a microphone;
   - a reference gas substantially similar to the at least one predetermined gas to be detected;
   - a reference body defining a reference chamber therein, the reference chamber having a pressure port coupled to the microphone; and
   - a broad-band optical window through which at least IR wavelengths corresponding to absorption peaks of the predetermined gas may pass, the optical window disposed between the IR source and the reference chamber, the reference gas being contained within the reference chamber between the optical window and the microphone.

2. The gas sensor according to claim 1, wherein the IR source is of low thermal mass.

3. The gas sensor according to claim 1 or 2, further comprising a secondary broad-band optical window interposed between the IR source and a sample gas to isolate the IR source from the sample gas.

4.  The gas sensor according to claim 3, wherein the secondary optical window is an upstream IR window and the optical window is a downstream IR window.

5.  The gas sensor according to one of the preceding claims, wherein the pressure port is acoustically coupled to the microphone.

6.  The gas sensor according to claim 4 or 5, wherein the upstream and downstream windows are of one of the group consisting of sapphire, calcium fluoride, zinc selenide, silicon, and germanium.

7.  The gas sensor according to one of the preceding claims 4 to 6, wherein the upstream and downstream windows are coated to narrow a band of IR energy transmitted by the upstream and downstream windows.

8.  The gas sensor according to one of the preceding claims, further comprising:

    - a first printed circuit board operatively connected to the IR Source and including electrical contacts for interfacing with a gas detection instrument; and
    - a second printed circuit board operatively connected to the microphone and including active filter circuitry and contacts electrically connected with the first printed circuit board.

9.  The gas sensor according to one of the preceding claims, further comprising a manifold connected to the reference body and defining a sample chamber adjacent the reference chamber, the sample chamber having an input port and an output port for receiving and exhausting a sample gas, the IR source being disposed to direct IR energy through the sample gas in the sample chamber.

10. The gas sensor according to claim 9, further comprising a secondary broad-band optical window interposed between the IR source and the sample chamber to impart IR energy generated from the IR source to the sample gas, the secondary optical window being an upstream IR window and the optical window being a downstream IR window, the IR source being disposed to direct IR energy first through the upstream window, then through the sample gas in the sample chamber, then through the downstream window and into the reference gas.

11. The gas sensor according to claims 9 or 10, wherein the sample chamber is at least one of polished, plated, and gold plated.

12. The gas sensor according to one of the preceding claims, wherein the reference chamber is at least one of polished, plated, and gold plated.

13. The gas sensor according to one of the preceding claims, wherein the IR source is operable to be driven with a PWM waveform, and a PWM waveform generator is operatively coupled to the IR Source.

14. The gas sensor according to claim 13, wherein the PWM waveform generator is one of a single-stage generator and a two-stage generator.

15. The gas sensor according to one of the preceding claims, wherein the reference gas is Carbon Dioxide.

16. The gas sensor according to one of the preceding claims, wherein the microphone is an electret condenser microphone.

17. The gas sensor according to claim 4, further comprising a hand-held gas detection instrument including:

    - a manifold connected to the reference body and defining a sample chamber adjacent the reference chamber, the sample chamber having an inlet port and an outlet port for receiving and exhausting the sample gas, the IR source being disposed to direct IR energy through the sample gas in the sample chamber;
    - a first printed circuit board operatively connected to the IR Source and including first contacts electrically connected to the IR source for interfacing with the gas detection instrument;
    - a second printed circuit board operatively connected to the microphone and including active filter circuitry and second contacts electrically connected with the first printed circuit board;
    - a power supply;
    - a circuit board assembly operatively connected to the power supply and including:

- sensor circuitry operatively connected to the first and second printed circuit boards;
- a suction pump fluidically connected to at least one of the input port and the output port;
- controls for actuating at least one of the IR source, the sensor, and the pump;
- indicators for reading a status of instrument;
- a probe defining a lumen therethrough fluidically connected to the input port; and
- an outer shell defining:

  - a sensor compartment sized to fit therein the IR source, the microphone, the reference body, the upstream and downstream optical windows; and
  - a power supply compartment sized to fit therein the power supply.

FIG. 1

FIG. 2

100

140

112

220

120

400, 410

**FIG. 3**

300, 310, 320

100

220

120

130

314

312

**FIG. 4**

FIG. 5

FIG. 6

FIG. 7

FIG. 8

FIG. 9

Fig. 10

FIG. 11

FIG. 12

FIG. 13

1402

1400

Bus

Processor — 1404

Main Memory — 1406

1410

Display Interface 1408 Display Unit

Secondary Memory — 1412

1414

Hard Disk Drive

1420

1418

1416

Removable Storage Drive → Removable Storage Unit

Interface → Removable Storage Unit

1422

1424

Communications Interface

1426

Communications Path

FIG. 14

**European Patent Office**

**EUROPEAN SEARCH REPORT**

Application Number

EP 08 00 8570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 40 34 375 A1 (DIEHL GMBH & CO [DE]) 30 April 1992 (1992-04-30) * figure 1 * | 1-17 | INV. G01N21/35 G01N21/37 G01N21/17 G01N21/61 |
| X | GB 2 200 209 A (MINE SAFETY APPLIANCES CO MINE SAFETY APPLIANCES CO [US]) 27 July 1988 (1988-07-27) * figures 2,3 * | 1-17 | |
| A | US 2006/254340 A1 (BARAKET MOURAD [US] ET AL BARAKET MOURAD [US] ET AL) 16 November 2006 (2006-11-16) * figure 1 * | 1-17 | |
| A | US 6 006 585 A (FORSTER MARTIN [CH]) 28 December 1999 (1999-12-28) * figures 1-3 * | 1-17 | |
| A | US 5 394 934 A (REIN ALAN D [US] ET AL) 7 March 1995 (1995-03-07) * figure 2 * | 1-17 | TECHNICAL FIELDS SEARCHED (IPC) |
| A | US 3 953 734 A (DIMEFF JOHN) 27 April 1976 (1976-04-27) * figure 1 * | 1-17 | G01N |
| A | US 4 595 016 A (FERTIG GLENN H [US] ET AL) 17 June 1986 (1986-06-17) * figure 1 * | 1-17 | |

The present search report has been drawn up for all claims

| Place of search | Date of completion of the search | Examiner |
|---|---|---|
| Munich | 4 August 2008 | Mason, William |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 00 8570

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2008

| Patent document cited in search report | | Publication date | Patent family member(s) | | Publication date |
|---|---|---|---|---|---|
| DE 4034375 | A1 | 30-04-1992 | NONE | | |
| GB 2200209 | A | 27-07-1988 | BR | 8503087 A | 11-03-1986 |
| | | | CA | 1224944 A1 | 04-08-1987 |
| | | | DE | 3520408 A1 | 13-02-1986 |
| | | | GB | 2162940 A | 12-02-1986 |
| | | | GB | 2200208 A | 27-07-1988 |
| | | | IT | 1206735 B | 03-05-1989 |
| | | | JP | 6076966 B | 28-09-1994 |
| | | | JP | 61047540 A | 08-03-1986 |
| | | | US | 4598201 A | 01-07-1986 |
| US 2006254340 | A1 | 16-11-2006 | WO | 2006124397 A1 | 23-11-2006 |
| US 6006585 | A | 28-12-1999 | EP | 0855592 A1 | 29-07-1998 |
| | | | ES | 2268716 T3 | 16-03-2007 |
| US 5394934 | A | 07-03-1995 | AU | 697611 B2 | 15-10-1998 |
| | | | AU | 2382495 A | 10-11-1995 |
| | | | BR | 9507309 A | 07-10-1997 |
| | | | CA | 2187777 A1 | 26-10-1995 |
| | | | DE | 69511385 D1 | 16-09-1999 |
| | | | DE | 69511385 T2 | 30-12-1999 |
| | | | EP | 0752085 A1 | 08-01-1997 |
| | | | JP | 9512629 T | 16-12-1997 |
| | | | WO | 9528606 A1 | 26-10-1995 |
| US 3953734 | A | 27-04-1976 | NONE | | |
| US 4595016 | A | 17-06-1986 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 92800007 P
- US 7022993 B, Williams. A
- US 5498873 A, Liebermann